# EUROPEAN PATENT APPLICATION

(11) **EP 2 613 522 A1**
(43) Date of publication of application: **10.07.2013**
(21) Application number: 13150175.1
(22) Date of filing: 03.01.2013
(51) Int. Cl.: H04N 5/445

(54) **Method and apparatus for on-screen channel selection**

(30) Priority: 06.01.2012 KR 20120001754
(71) Applicant: Samsung Electronics Co., Ltd., Gyeonggi-do 443-742 (KR)
(72) Inventor: Lee, Dong-heon, Seoul (KR); Kwon, Yong-hwan, Gyeonggi-do (KR)
(74) Representative: Bray, Richard Anthony

(57) **Abstract**

A display apparatus and a control method thereof are provided. The display apparatus (100) includes: an image processor (120) which processes an image signal; a display unit (130) which displays an image thereon based on the processed image signal; a user input (140) unit which receives a user input; and a controller (160) which displays a plurality of selectable items on the display unit, and upon receiving a first user input to select a first item from the plurality of selectable items from the user input unit, displays a display window displaying an input result of the first user input in a vicinity of the first item, and upon receiving a second user input to select a second item, which is different from the first item, from the user input unit, controls the display unit to move and display the display window in a vicinity of the second item.

## Description

### BACKGROUND

### Field

Apparatuses and methods consistent with exemplary embodiments relate to a display apparatus and a control method thereof, and more particularly, to a display apparatus and a control method thereof which displays a result of a user's input.

### Description of the Related Art

A display apparatus processes image signals/image data transmitted by various external image supply sources or stored in the display apparatus to display an image on a display panel. For example, a display apparatus which is provided to general users includes a television (TV) or a monitor. The display apparatus which is realized as a TV processes a broadcasting signal transmitted from the outside through various image processing operations, such as decoding and scaling operations, and provides an image of a desired broadcasting channel.

A display apparatus may display on a screen a plurality of optional items as a user interface (UI) to be selected by a user, such as a channel number. A user may select one of displayed items through a user input unit such as a remote controller, and the display apparatus may give feedback to the user through a display window displaying the item selected by the user.

However, if the display window and the selected item are spaced from each other and separately displayed, a user's attention may be distracted.

### SUMMARY

According to the present invention there is provided an apparatus and method as set forth in the appended claims. Other features of the invention will be apparent from the dependent claims, and the description which follows.

According to an aspect of an exemplary embodiment, there is provided a display apparatus including: an image processor which processes an image signal; a display unit which displays an image thereon based on the processed image signal; a user input unit which receives a user input; and a controller which displays a plurality of optional items on the display unit, and upon receiving a first user input to select a first item from the plurality of items from the user input unit, displays a display window displaying an input result of the first user input in a vicinity of the first item, and upon receiving a second user input to select a second item, which is different from the first item, from the user input unit, controls the display unit to move and display the display window in a vicinity of the second item.

The display window may display a combination result of the first and second items.

The controller may control the display unit to highlight and display an item selected from the plurality of items.

The controller may highlight and display the first item corresponding to the selection of the first item, and may control the display unit to highlight and display the second item corresponding to the selection of the second item rather than highlighting and displaying the first item.

The user input unit may include a communication module which receives a signal corresponding to the user input from a predetermined input device.

The plurality of items may be displayed in at least one side of a screen of the display unit.

The plurality of items may be displayed in at least one of a transverse direction and a vertical direction in the at least one side of the screen of the display unit.

The plurality of items may be arranged in a circular shape or a grid pattern in the screen of the display unit.

The plurality of items may include at least one of numbers, letters and icons.

According to an aspect of another exemplary embodiment, there is provided a control method of a display apparatus, the control method including: displaying a plurality of optional items; receiving a first user input to select a first item from the plurality of items; displaying a display window displaying an input result of the first user input, in a vicinity of the first item; receiving a second user input to select a second item which is different from the first item; and moving and displaying the display window in a vicinity of the second item.

The moving and displaying the display window in the vicinity of the second item may include displaying a combination result of the first and second items in the display window.

The control method may further include highlighting and displaying an item selected from the plurality of items.

The highlighting and displaying the selected item may include: highlighting and displaying the first item corresponding to the selection of the first item; and highlighting and displaying the second item corresponding to the selection of the second item rather than highlighting and displaying the first item.

The receiving the first user input may include receiving a signal corresponding to the first user input from a predetermined input device.

The plurality of items may be displayed in at least one side of a screen of the display unit.

The displaying the plurality of items may include displaying the plurality of items as at least one of a transverse direction and a vertical direction in the at least one side of the screen of the display unit.

The displaying the plurality of items may include arranging the plurality of items in a circular shape or grid pattern in the screen of the display unit.

The plurality of items may includes at least one of numbers, letters and icons.

According to an aspect of another exemplary embodiment, there is provided a control method of an image processing apparatus, the control method including: controlling to display a plurality of selectable items; in response to receiving a first user input to select a first item from among the plurality of selectable items, controlling to display a display window displaying an input result of the first user input in a first area, corresponding to the first item, in a vicinity of the first item; and in response to receiving a second user input to select a second item, which is different from the first item, from among the plurality of selectable items, controlling to display the display window in a second area, different from the first area and corresponding to the second item, in a vicinity of the second item.

The controlling to display the plurality of selectable items may include outputting, to an external display device, an image signal for displaying the plurality of selectable items; the controlling to display the display window in the first area may include outputting, to the external display device, a first image signal for displaying the display window in the first area; and the controlling to display the display window in the second area may include outputting, to the external display device, a second image signal for displaying the display window in the second area.

### BRIEF DESCRIPTION OF THE DRAWINGS

The above and/or other aspects will become apparent and more readily appreciated from the following description of exemplary embodiments, taken in conjunction with the accompanying drawings, in which:
FIG. 1 is a block diagram of a display apparatus according to an exemplary embodiment;
FIGS. 2 to 7 illustrate a screen displayed on a display unit of a display apparatus according to an exemplary embodiment; and
FIG. 8 is a flowchart showing a control method of a display apparatus according to an exemplary embodiment.

### DETAILED DESCRIPTION OF EXEMPLARY EMBODIMENTS

Below, exemplary embodiments will be described in detail with reference to accompanying drawings so as to be easily realized by a person having ordinary knowledge in the art. Exemplary embodiments may be embodied in various forms without being limited to the exemplary embodiments set forth herein. Descriptions of well-known parts are omitted for clarity, and like reference numerals refer to like elements throughout.

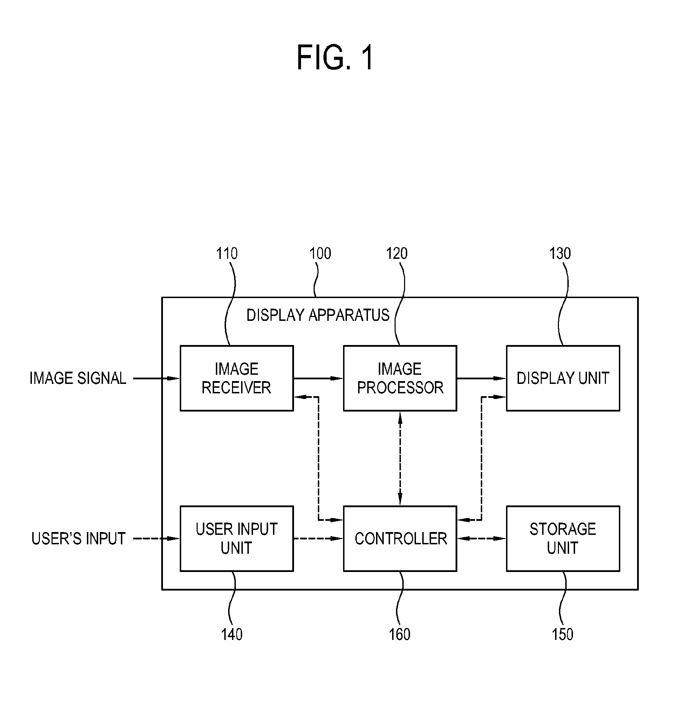

FIG. 1 is a block diagram of a display apparatus 100 according to an exemplary embodiment.

As shown therein, the display apparatus 100 processes an image signal supplied by an external image supply source (not shown) according to a preset image processing operation, and displays an image based on the processed image signal.

The display apparatus 100 according to the present exemplary embodiment may include a TV which displays a broadcasting image based on at least one of broadcasting signals, broadcasting information, and broadcasting data transmitted by a transmission device of a broadcasting station. However, it is understood that in one or more other exemplary embodiments, the display apparatus 100 may apply to various other devices which process and display an image, in addition to a TV. For example, the display apparatus 100 may include a monitor.

The type of an image which is displayable by the display apparatus 100 is not limited to a broadcasting signal. For example, the display apparatus 100 may display video, still images, applications, and on-screen display (OSD) images based on at least one of signals/data supplied by various image supply sources, a graphic user interface (GUI) for controlling various operations, etc.

As shown therein, the display apparatus 100 includes an image receiver 110 which receives an image signal, an image processor 120 which processes the image signal received by the image receiver 110, a display unit 130 which displays thereon an image based on the image signal processed by the image processor 120, a user input unit 140 which receives a user's input, a storage unit 150 which stores therein various data, and a controller 160 which controls the display apparatus 100.

The image receiver 110 receives and transmits an image signal to the image processor 120. The image receiver 110 may vary depending on a standard of a received image signal and the embodiment type of the display apparatus 100. For example, the image receiver 110 may receive a radio frequency (RF) signal in a wireless manner from a broadcasting station (not shown), or image signals in a wired manner according to at least one of standards such as composite video, component video, super video, Syndicat des Constructeurs d'Appareils Radiorécepteurs et Téléviseurs (SCART), high definition multimedia interface (HDMI), etc. The image receiver 110 may include a tuner to tune a broadcasting signal by channel if the image signal includes a broadcasting signal.

The image signal may be input from the outside, e.g., from an external device such as a personal computer (PC), audio/video (AV) device, digital camera, smart phone, smart pad, etc. The image signal may be data which is received through a network such as the Internet. In this case, the display apparatus 100 may further include a network communication unit (not shown) which communicates through a network. The image signal may be data stored in a non-volatile storage unit 150 such as a flash memory, a hard disc drive, etc. The storage unit 150 may be provided internally or externally with respect to the display apparatus 100. If the storage unit 150 is provided externally to the display apparatus 100, the display apparatus 100 may further include a connector (not shown) to which the storage unit 150 is connected.

The image processor 120 performs preset various image processing operations with respect to an image signal. The image processor 120 outputs the processed image signal to the display unit 130 to display an image on the display unit 130 based on the image signal.

The image processing operations of the image processor 120 may include at least one of a decoding operation corresponding to various image formats, a de-interlacing operation, a frame refresh rate conversion operation, a scaling operation, a noise reduction operation to improve an image quality, a detail enhancement operation, a line scanning operation, etc. The image processor 120 may be realized as a group of individual elements which may individually perform the foregoing operations, a system-on-chip (SoC) which integrates such operations, etc.

The display unit 130 displays thereon an image based on an image signal processed by the image processor 120. The display unit 130 may include liquid crystal, a plasma display panel, light-emitting diode display, organic light-emitting diode display, surface-conduction electron-emitter display, carbon nano-tube display, nano-crystal display, etc.

The display unit 130 may further include additional elements depending on its embodiment type. For example, if the display unit 130 includes liquid crystal, the display unit 130 may further include a liquid crystal display (LCD) panel (not shown), a backlight unit (not shown) emitting light to the LCD panel, and a panel driving substrate (not shown) driving the LCD panel.

The user input unit 140 transmits preset various control commands and information to the controller 160 by a user's manipulation and input. By way of example, the user input unit 140 may be realized as a menu key and an input panel provided on an external side of the display apparatus 100 or may be realized as a remote controller that is separated from the display apparatus 100. If the user input unit 140 includes a remote controller, there is no restriction in transmitting a user's input from the user input unit 140 to the controller 160, and a wireless communication may be used. The wireless communication includes infrared communication, RF communication, etc. In this case, the display apparatus 100 may further include a communication module (not shown) which receives a signal corresponding to a user's input from the user input unit 140 and transmits the signal to the controller 160.

The user input unit 140 which is realized as a remote controller may include a touch sensor which receives a user's touch input. A user's touch input may vary, and may include a tap, a click which is stronger than the tap, a double click, a drag, a slide, a flicking, etc.

The user input unit 140 which is realized as a remote controller may include a pointing device in which a motion sensor is mounted. The motion sensor includes a gyro sensor, an angular velocity sensor, and a terrestrial magnetic sensor. The remote controller calculates motion information based on a motion result of the motion sensor and transmits a corresponding command to the display apparatus 100.

The user input unit 140 may include a user interface (UI) (e.g., a graphic user interface (GUI)) displayed on the display unit 130 to be selected by a user. If the display unit 130 includes a touch screen, the user input unit 140 may transmit to the controller 160 a command corresponding to a user's input generated by a user touching the UI of the display unit 130.

A user may select a UI displayed on the display unit 130 by manipulating a direction key (among, for example, four direction keys) or a touch sensor provided in a remote controller. According to the present exemplary embodiment, a user selects the UI displayed on the display unit 130 by manipulating a remote controller as the user input unit 140. However, it is understood that one or more other exemplary embodiments are not limited thereto, and various user inputs may apply.

The storage unit 150 stores therein data according to a control of the controller 160. The storage unit 150 may include a non-volatile storage medium such as a flash memory and a hard disc drive. The storage unit 150 is accessed by the controller 160, and data is read, recorded, modified, deleted, updated, etc., by the controller 160.

The data stored in the storage unit 150 may include, e.g., an operating system for driving the display apparatus 100, and other various applications, image data, and additional data which are executed in the operating system.

The controller 160 performs control operations for various elements of the display apparatus 100. For example, the controller 160 controls operations of the display apparatus 100 by controlling the image processor 120 to process an image and by performing a corresponding control operation to a command of the user input unit 140.

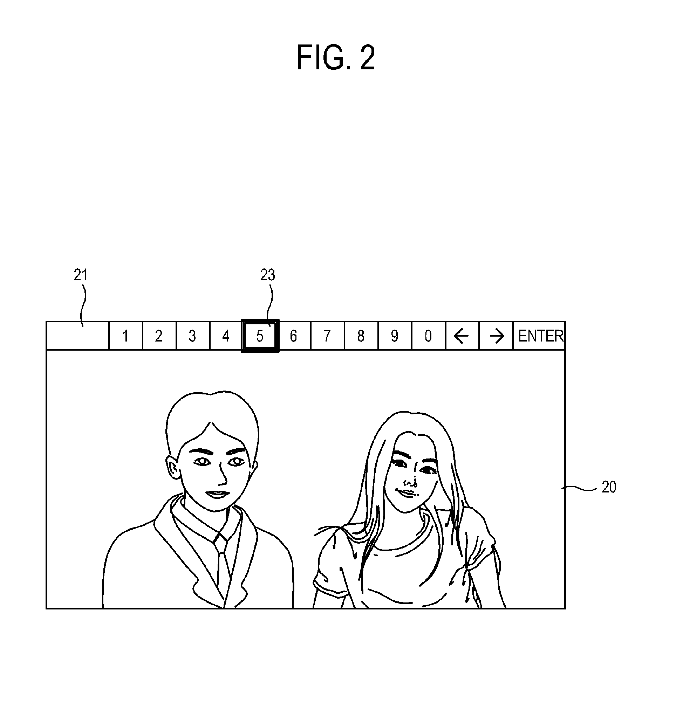

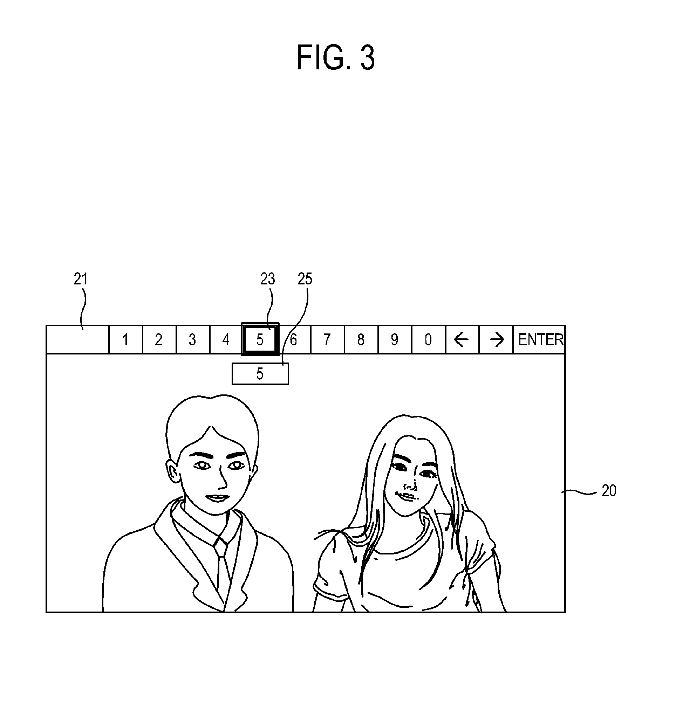

For example, referring to FIGS. 2 and 3, the controller 160 displays on the display unit 130 a plurality of optional (e.g., selectable) items 21, and upon receiving, from the user input unit 140, a user's input to select a first item 23 from among the plurality of items 21, controls the display unit 130 to display in the vicinity of the first item 23 a display window 25 displaying an input result.

FIGS. 2 to 7 illustrate a screen 20 displayed on a display unit 130 according to an exemplary embodiment.

As shown therein, the controller 160 may control the display unit 130 to display thereon the screen 20 including the plurality of items 21. The plurality of items 21 corresponds to optional UI items including numbers corresponding to channel numbers, though it is understood that one or more other exemplary embodiments are not limited thereto. For example, the plurality of items 21 may include other various types of UI items including letters, icons (graphics), numbers, etc. The letters may include various languages including Korean, English, Chinese, etc.

In the present exemplary embodiment, the plurality of items 21 is displayed on one side, e.g., upper side, in a transverse direction, of the screen 20 displayed on the display unit 130. However, it is understood that one or more other exemplary embodiments are not limited thereto. For example, the plurality of items 21 may be displayed in a transverse direction, a vertical direction or in a combination of the transverse and vertical directions in at least one side of the screen 20. The plurality of items 21 may be displayed in other various locations as well as in the external side as above and may be arranged in a circular shape or a grid pattern.

The controller 160 may highlight and display an item selected from the plurality of items 21 through the user input unit 140, i.e., the first item 23 in FIG. 2. However, it is understood that one or more other exemplary embodiments are not limited to distinguishing the selected item via the highlight. For example, the selected item may be distinguished by a pointer, a cursor, a flickering, etc.

As in FIG. 3, the display window 25 displaying an input result is displayed in the vicinity of the item 23 selected by a user. As a result, a user's attention is not distracted, and the user's usability and convenience may improve. The display window 25 may include a predetermined field (e.g., input field) displaying a result of a user's input.

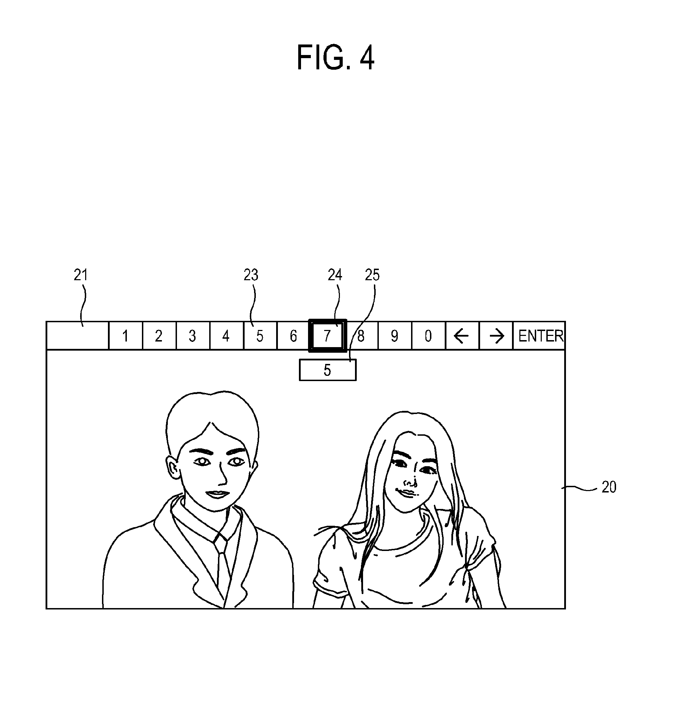

Upon receiving a user's input to select a second item 24 which is different from the first item 23 from the user input unit 140 while the display window 25 is displayed in the vicinity of the first item 23 as in FIG. 3, the controller 160 controls the display unit 130 to move and display the display window 25 in the vicinity of the second item 24 as shown in FIG. 4.

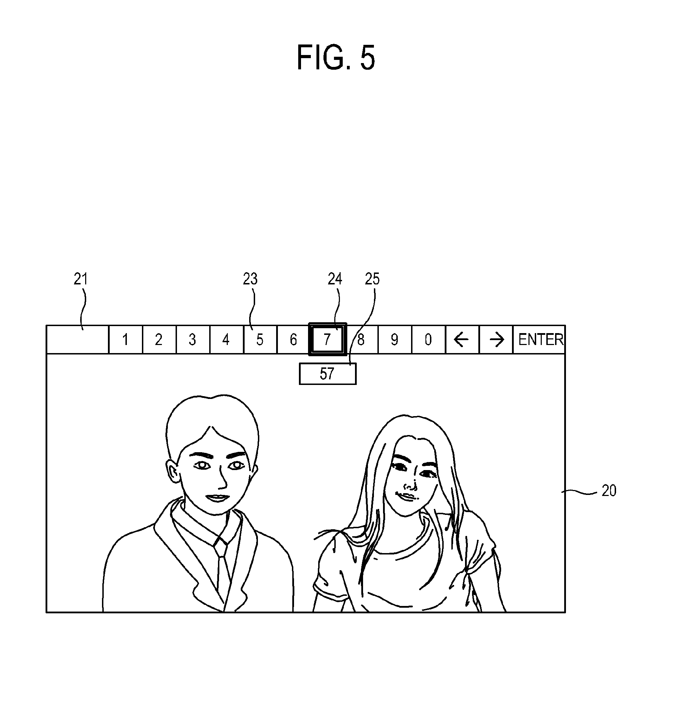

The controller 160 controls the display unit 130 to display on the display window 25 a combination result of the first and second items 23 and 24. For example, as shown in FIG. 5, if the first item 23 is a number 5 and the second item 24 is a number 7, 57 as a combination of the first and second items 23 and 24 is displayed on the display window 25.

In the present exemplary embodiment, if the item selected by a user is changed, the display window 25 is moved and displayed in the vicinity of the changed selection item 24, and the result of such combination is displayed. Thus, a user's attention is not distracted continuously and usability and convenience improves.

The controller 160 highlights and displays the first item 23 corresponding to the selection of the first item 23 as in FIGS. 2 and 3, and controls the display unit 130 to highlight and display the second item 24 corresponding to the selection of the second item 24 as in FIGS. 4 and 5 rather than highlighting and displaying the first item 23.

The present exemplary embodiment moves and displays the focus as the highlight, according to a user's selection to enable a user to easily recognize what the selected item is.

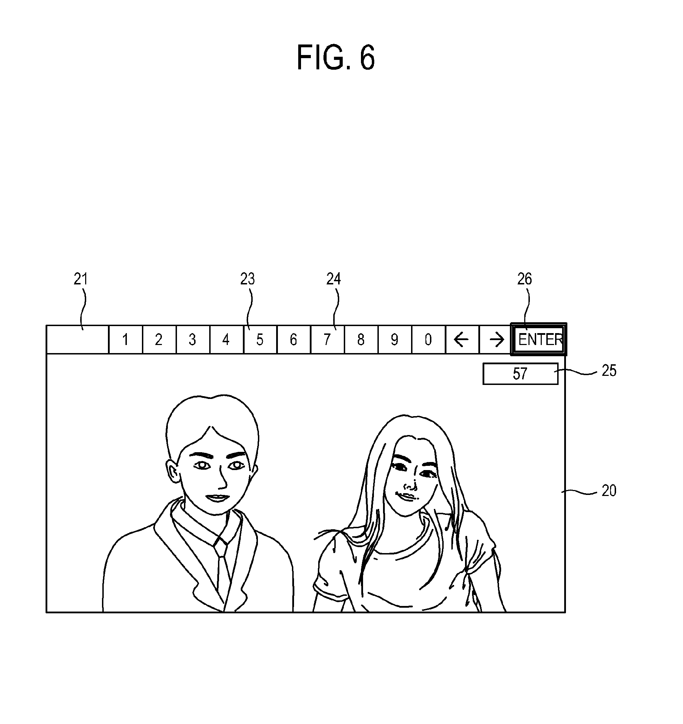

Upon receiving a user's input to select a third item 26, which is different from the first and second items 23 and 24, from the user input unit 140 while the display window 25 is displayed in the vicinity of the second item 24 as in FIG. 5, the controller 160 controls the display unit 130 to move and display the display window 25 in the vicinity of the third item 26 as shown in FIG. 6.

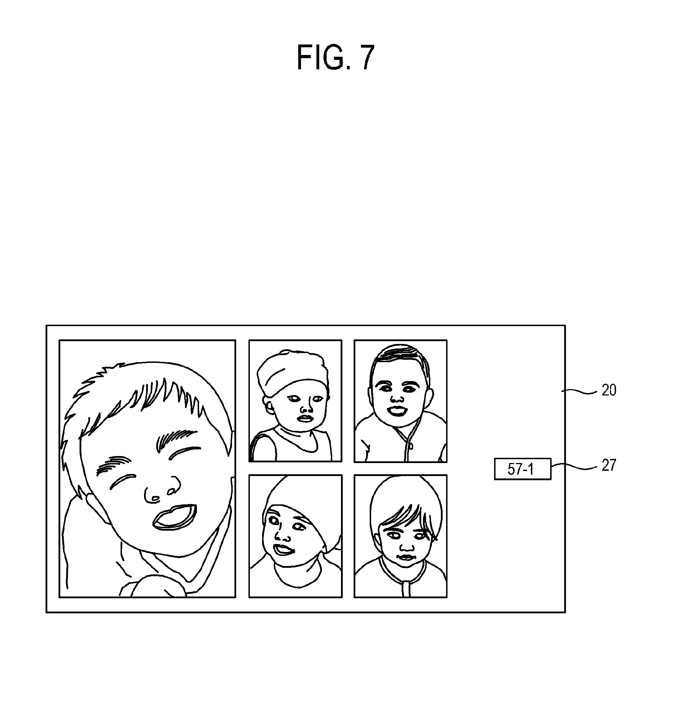

If the third item 26 is, for example, "ENTER," the controller 160 determines that the input for selecting a channel has been completed, and controls the image receiver 110 to receive an image signal corresponding to the selected channel as shown in FIG. 7, controls the image processor 120 to process the received image signal, and controls the display unit 130 to display an image thereon corresponding to the processed image signal. The controller 160 may control the display unit 130 to further display thereon an icon 27 displaying a selected channel number.

Even if a user does not select the third item 26 corresponding to "ENTER" after the input of the channel number, the controller 160 may automatically select the channel and control the corresponding elements to receive and process the image signal and display the image corresponding to the image signal, for example, if a predetermined time elapses.

Hereinafter, a control method of a display apparatus 100 according to an exemplary embodiment will be described with reference to accompanying drawings.

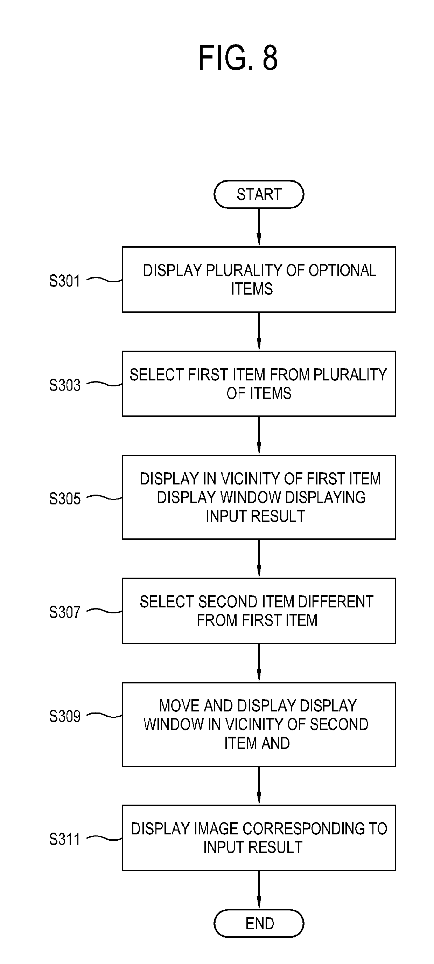

FIG. 8 is a flowchart showing a control method of a display apparatus 100 according to an exemplary embodiment.

Referring to FIG. 8, the display apparatus 100 displays on the display unit 130 a plurality of optional items 21, i.e., UI items (operation S301).

A user manipulates the user input unit 140 such as a remote controller and selects the first item 23 from among the plurality of items 21 displayed at operation S301 (operation S303).

The controller 160 controls the display unit 130 to display in the vicinity of the first item 23 selected at operation S303 the display window 25 displaying the input result (operation S305). The controller 160 may control the display unit 130 to highlight, including giving focus thereto, and display the selected first item 23.

A user may manipulate the user input unit 140 and select the second item 24 which is different from the first item 23 (operation S307). A user may move the selected item through a direction key of a remote controller and select the second item 24, and the controller 160 controls the display unit 130 to move the focus according to the movement of the selected item and display the second item 25. Rather than the first item 23, the second item 25 is highlighted and displayed.

The controller 160 controls the display unit 130 to move and display the display window 25 in the vicinity of the second item 24 selected at operation S307 (operation S309). The display window 25 displays a combination result of the first and second items 23 and 24.

The controller 160 controls the display unit 130 to display an image corresponding to the input result of the operations S303 and S311 (operation S311). For example, if the input result includes a predetermined channel number, the controller 160 controls the image receiver 110, the image processor 120, and the display unit 130 to receive, process and display the image corresponding to the channel number.

As described above, a display apparatus and a control method thereof according to exemplary embodiments display a display window 25 displaying an input result in a vicinity of selected items 23 and 24, and upon change of the selected item, moves and displays the display window 25 in the vicinity of the changed selected item 24 and displays a combined input result to thereby minimize distraction for a user and improve usability and convenience.

Further, the display apparatus and the control method thereof according to exemplary embodiments moves and displays a focus (e.g., highlight) according to a user's selection so that a user may easily recognize what the selected item is.

While the above-described exemplary embodiments relate to a display apparatus 100, it is understood that other exemplary embodiments are not limited thereto. For example, one or more other exemplary embodiments may relate to an image processing apparatus such as a set-top box, a stand-alone control device, an audio/video receiver, an optical media player, an image source, etc.

While not restricted thereto, an exemplary embodiment can be embodied as computer-readable code on a computer-readable recording medium. The computer-readable recording medium is any data storage device that can store data that can be thereafter read by a computer system. Examples of the computer-readable recording medium include read-only memory (ROM), random-access memory (RAM), CD-ROMs, magnetic tapes, floppy disks, and optical data storage devices. The computer-readable recording medium can also be distributed over network-coupled computer systems so that the computer-readable code is stored and executed in a distributed fashion. Also, an exemplary embodiment may be written as a computer program transmitted over a computer-readable transmission medium, such as a carrier wave, and received and implemented in general-use or special-purpose digital computers that execute the programs. Moreover, one or more units or elements of the above-described apparatuses may include a processor or microprocessor executing a computer program stored in a computer-readable medium.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus (100) comprising:
an image processor (120) which processes an image signal;
a display unit (130) which displays an image thereon based on the processed image signal;
a user input unit (140) which receives a user input; and
a controller (160) which displays a plurality of optional items on the display unit, and upon receiving a user input to select a first item from the plurality of optional items from the user input unit, displays a display window displaying an input result of the first user input in a vicinity of the first item, and upon receiving a second user input to select a second item, which is different from the first item, from the user input unit, controls the display unit to move and display the display window in a vicinity of the second item.

2. The display apparatus according to claim 1, wherein the display window displays a combination result of the first and second items.

3. The display apparatus according to claim 1, wherein the controller controls the display unit to highlight and display an item selected from the plurality of optional items.

4. The display apparatus according to claim 3, wherein the controller highlights and displays the first item corresponding to the selection of the first item, and controls the display unit to highlight and display the second item corresponding to the selection of the second item rather than highlighting and displaying the first item.

5. The display apparatus according to claim 1, wherein the user input unit comprises a communication module which receives a signal corresponding to the user input from a predetermined input device.

6. The display apparatus according to one of claims 1 to 5, wherein the plurality of optional items is displayed in at least one side of a screen of the display unit.

7. The display apparatus according to claim 6, wherein the plurality of optional items is displayed in at least one of a transverse direction and a vertical direction in the at least one side of the screen of the display unit.

8. The display apparatus according to one of claims 1 to 5, wherein the plurality of optional items is arranged in a circular shape or a grid pattern in the screen of the display unit.

9. The display apparatus according to one of claims 1 to 5, wherein the plurality of optional items comprises at least one of numbers, letters and icons.

10. A control method of a display apparatus, the control method comprising:
displaying a plurality of optional items (S301);
receiving a first user input to select a first item from the plurality of optional items (S303);
displaying a display window displaying an input result of the first user input, in a vicinity of the first item (S305);
receiving a second user input to select a second item which is different from the first item (S307); and
moving and displaying the display window in a vicinity of the second item (S309).

11. The control method according to claim 10, wherein the moving and displaying the display window in the vicinity of the second item comprises displaying a combination result of the first and second items in the display window.

12. The control method according to claim 10, further comprising highlighting and displaying an item selected from the plurality of optional items.

13. The control method according to claim 12, wherein the highlighting and displaying the selected item comprises:
highlighting and displaying the first item corresponding to the selection of the first item;
and
highlighting and displaying the second item corresponding to the selection of the second item rather than highlighting and displaying the first item.

14. The control method according to one of claims 10 to 13, wherein the plurality of optional items is displayed in at least one side of a screen of a display unit.

15. The control method according to one of claims 10 to 13, wherein the displaying the plurality of optional items comprises arranging the plurality of items in a circular shape or grid pattern in a screen of a display unit.
